# FASCICULE DE BREVET EUROPEEN

(11) **EP 0 732 592 B1**
(45) Date de publication et mention de la délivrance du brevet: **28.11.2001**
(21) Numéro de dépôt: 96410021.8
(22) Date de dépôt: 12.03.1996
(51) Int. Cl.: G01P 3/66

(54) **Procédé de détermination de la vitesse de défilement d'un chèque**
Verfahren zum Bestimmen der Vorbeilaufgeschwindigkeit eines Scheckes
Method for determining the speed of a passing cheque

(30) Priorité: 14.03.1995 FR 9503162
(43) Date de publication de la demande: 18.09.1996
(73) Titulaire: ASCOM MONETEL S.A., 07500 Guilherand-Granges (FR)
(72) Inventeur: Boissonnet, Patrick, 26800 Portes Les Valence (FR); Carabelli, André, 07130 Saint Peray (FR)
(74) Mandataire: de Beaumont, Michel

(56) Documents cités:
- US-A- 3 575 658
- US-A- 4 100 599
- US-A- 5 331 276

## Description

La présente invention concerne un système de traitement de documents, notamment pour lire des caractères de contrôle normalisés sur un chèque et imprimer un texte sur celui-ci.

Actuellement, la plupart des chèques sont munis, à leur partie inférieure, de caractères de contrôle qui indiquent le numéro de compte, le code de la banque, etc. Ces caractères de contrôle sont à la fois lisibles par l'utilisateur et exploitables par un système de reconnaissance de caractères.

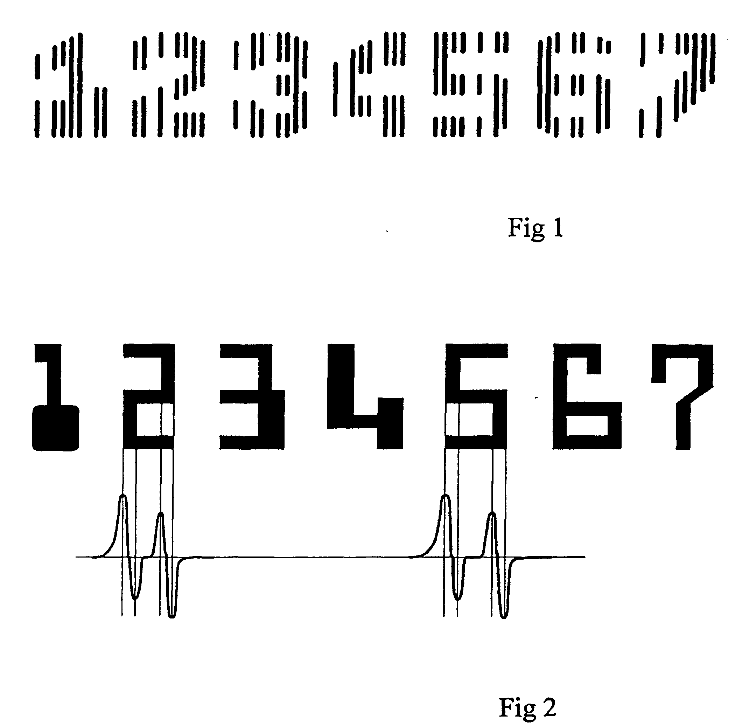

La figure 1 représente quelques caractères (les chiffres 1 à 7) extraits du jeu CMC7 défini par la norme ISO 1004. Ce jeu de caractères est utilisé en France et dans quelques autres pays européens. Chaque caractère est composé de sept barres verticales d'épaisseur constante. Parmi les six espaces qui séparent les barres d'un caractère, deux d'entre eux sont longs et les quatre restants sont courts. Les espaces courts ont une distance normalisée de 0,3 mn et les espaces longs ont une distance normalisée de 0,5 mm. Avec les différentes combinaisons de succession des espaces longs et courts, on obtient les chiffres de 0 à 9 et quelques autres caractères de contrôle que l'on trouve sur les chèques.

Les caractères CMC7 sont imprimés avec une encre magnétisable. Ainsi, un système de traitement peut détecter les barres successives à l'aide d'un capteur magnétique linéaire vertical tandis que le chèque défile. Généralement, une tête magnétique magnétise les barres avant que celles-ci passent devant le capteur.

La figure 2 représente quelques caractères (les mêmes chiffres que ceux de la figure 1) extraits du jeu E13B qui est essentiellement utilisé dans les pays anglo-saxons. Ce jeu E13B est défini par la norme ANSI X 3.2 Rev. 1976. Chaque caractère est imprimé avec une encre magnétisable selon une forme bien particulière (avec des parties plus ou moins larges). Un capteur magnétique linéaire vertical devant lequel ces caractères défilent fournit, comme cela est représenté pour les chiffres 2 et 5 à la figure 2, des impulsions d'amplitude, polarité et distance variables selon les zones des caractères balayés par le capteur. Par exemple, comme cela est représenté pour les chiffres 2 et 5, le signal fourni par le capteur présente, en début de caractère, une grande impulsion positive suivie d'une petite impulsion négative et, en fin de caractère, une petite impulsion positive suivie d'une grande impulsion négative.

Ce qui permet de différencier les chiffres 2 et 5 est la distance entre les impulsions de début de caractère et les impulsions de fin de caractère.

Un système de traitement des caractères E13B stocke l'allure du signal de sortie du capteur, sous forme d'échantillons, et effectue sur cette allure une reconnaissance de forme en la comparant à des formes prédéfinies correspondant aux caractères.

Pour reconnaître les deux jeux de caractères décrits ci-dessus, il est nécessaire de connaître à tout instant la vitesse de défilement du chèque afin, dans le jeu CMC7, de fiablement différencier les espaces longs des espaces courts et, dans le jeu E13B, de différencier des formes similaires qui se distinguent seulement par une dilatation selon l'échelle du temps, comme par exemple les formes associées aux chiffres 2 et 5.

La connaissance de la vitesse de défilement du chèque n'est pas seulement nécessaire à la reconnaissance des caractères de contrôle. En effet, il est de plus en plus courant, dans les grands magasins, pour accélérer le passage des clients aux caisses, d'imprimer sur les chèques la somme, l'ordre, le lieu et la date. Il est nécessaire de bien connaître la vitesse de défilement du chèque pour que l'impression soit régulière et lisible.

La solution la plus couramment utilisée pour connaître avec précision la vitesse de défilement du chèque est d'entraîner celui-ci par moteur à vitesse constante. L'emploi d'un moteur rend le système de traitement encombrant et coûteux.

Un objet de la présente invention est de prévoir un procédé qui permette de détecter la vitesse instantanée de défilement de documents, tels que des chèques, entraînés manuellement devant un capteur de caractères de contrôle.

Pour cela, on pourrait envisager de munir le système de traitement d'un capteur de vitesse, mais l'emploi d'un capteur de vitesse serait aussi coûteux que l'emploi d'un moteur.

Ainsi, un objet plus particulier de la présente invention est de déterminer la vitesse sans utiliser un capteur de vitesse.

Ces objets sont atteints grâce à un procédé de détermination de la vitesse instantanée de défilement d'un document comportant des caractères de contrôle exploitables électroniquement par un capteur, dans lequel la vitesse instantanée est déterminée en fonction de la détection des caractères de contrôle en exploitant des caractéristiques propres aux caractères de contrôle.

Selon un mode de réalisation de la présente invention, le procédé est appliqué à des caractères de contrôle comportant des barres à espacements normalisés. La vitesse instantanée est déterminée en fonction de la durée de passage de deux barres devant le capteur et de l'espace nominal séparant les deux barres.

Selon un mode de réalisation de la présente invention, le procédé est appliqué à des caractères de contrôle ayant des formes normalisées destinées à permettre une reconnaissance de forme du signal fourni par un capteur. Il comprend les étapes consistant à détecter les caractères de contrôle à l'aide de deux capteurs disposés à une distance prédéterminée l'un de l'autre ; à échantillonner les signaux respectifs fournis par les capteurs ; pour un échantillon du deuxième capteur dans le sens de défilement du document, à trouver parmi les échantillons du premier capteur celui qui correspond le mieux audit échantillon ; et à déterminer la vitesse instantanée en fonction de la distance entre les capteurs et de la distance temporelle séparant ledit échantillon de celui qui lui correspond le mieux.

L'invention peut servir à l'impression de texte sur un document comportant des caractères de contrôle. L'impression est alors synchronisée sur le défilement du document à partir de la vitesse instantanée déterminée de la manière susmentionnée.

Selon un mode de réalisation de la présente invention, la vitesse est extrapolée entre deux déterminations de vitesse à partir de la dernière vitesse déterminée et d'une accélération correspondante.

L'invention peut être utilisée dans un procédé de reconnaissance de caractères de contrôle sur un document défilant. Le procédé comprend alors les étapes consistant à déterminer la vitesse instantanée de défilement de la manière susmentionnée ; à stocker les échantillons d'un premier des deux capteurs avec les vitesses correspondantes ; à normaliser l'allure du signal fourni par le premier capteur à l'aide des échantillons et des vitesses correspondantes ; et à appliquer une reconnaissance de forme sur l'allure normalisée.

Ces objets, caractéristiques et avantages ainsi que d'autres de la présente invention seront exposés plus en détail dans la description suivante de modes de réalisation particuliers, faite à titre non-limitatif à l'aide des figures jointes parmi lesquelles :
les figures 1 et 2, précédemment décrites, représentent deux exemples de jeux de caractères de contrôle utilisés pour le traitement de chèques ;
la figure 3 représente un exemple d'organigramme illustrant le procédé de détermination de vitesse de défilement selon l'invention, appliqué au jeu de caractères de la figure 1 ;
la figure 4 représente un capteur selon la présente invention permettant de déterminer la vitesse de défilement à partir des caractères du jeu de la figure 2 ;
la figure 5 représente un exemple de signaux fournis par le capteur de la figure 4 ; et
la figure 6 représente un exemple d'organigramme illustrant le procédé selon l'invention appliqué au jeu de caractères de la figure 2.

Pour déterminer la vitesse de défilement d'un document muni de caractère de contrôle CMC7 (figure 1), l'invention prévoit essentiellement de dater chaque détection du passage d'une barre devant un capteur destiné à lire ces caractères de contrôle, et de relever le temps écoulé depuis la détection de la barre précédente. Etant donné que les distances entre les barres d'un caractère sont normalisées, il suffit de diviser la distance normalisée par ce temps écoulé pour trouver la vitesse de défilement.

Une difficulté réside dans le fait .que les barres ne sont pas régulièrement espacées, puisque chaque caractère comporte deux espaces longs et quatre espaces courts. Ainsi, il faut savoir si c'est l'espace court ou l'espace long qu'il faut diviser par le temps écoulé.

Pour surmonter cette difficulté, la présente invention utilise un seuil de durée au-delà duquel un espace est supposé être long, ce seuil de durée étant réajusté en fonction de la dernière vitesse instantanée trouvée. Les espaces longs et courts étant respectivement de 0,5 et 0,3 mm, le seuil est réglé, par exemple, de manière à correspondre à un espace de 0,4 mm en fonction de la dernière vitesse trouvée.

Lors d'une impression de texte sur un chèque selon l'invention, on utilise l'information de vitesse pour déterminer à quel instant il faut imprimer une nouvelle rangée verticale de points destinés à constituer un caractère imprimé. La vitesse trouvée à la dernière barre est intégrée pour déterminer la distance parcourue et donc les instants auxquels il faut imprimer les rangées verticales de points. Entre deux barres, notamment celles séparées par un espace long ou par un espace de séparation de caractères, il se peut que la vitesse varie significativement, de sorte que la régularité de l'impression se détériore avant l'arrivée de la barre suivante. En outre, cette variation significative pourrait fausser le réglage du seuil de durée pour différencier les espaces longs des espaces courts.

Pour éviter cela, de préférence, on calcule, à chaque barre, l'accélération en fonction des deux dernières vitesses déterminées et du temps mesuré entre les deux barres correspondantes, ce qui permet d'extrapoler la vitesse jusqu'à l'arrivée de la barre suivante. Ceci permet d'extrapoler en même temps le seuil de durée.

Bien entendu, l'accélération est également susceptible de varier, en théorie. En pratique, il s'avère que l'accélération, lors d'un entraînement manuel, est pratiquement constante. Il est donc inutile d'extrapoler l'accélération.

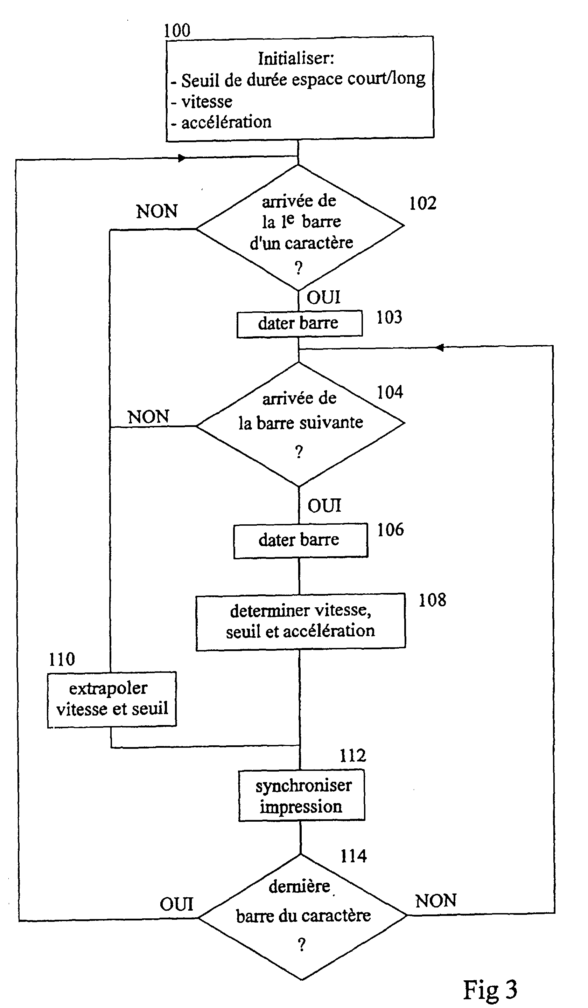

La figure 3 représente un exemple d'organigramme illustrant plus en détail le procédé selon l'invention appliqué au jeu de caractères CMC7. Chaque paragraphe décrivant un bloc d'organigramme est précédé du numéro du bloc.
100. Pour pouvoir déterminer la vitesse à partir de la durée mesurée entre deux barres, il faut connaître le seuil permettant d'indiquer si cette durée correspond à un espace long ou à un espace court. Pour cela, par exemple, on mémorise les dates des sept premières barres, c'est-à-dire celles correspondant au premier caractère. Ensuite, on essaie des valeurs croissantes successives du seuil, jusqu'à ce que l'on détecte deux espaces longs et quatre espaces courts. Le seuil ainsi trouvé permet de déterminer les vitesses correspondant aux six dernières barres du caractère et les accélérations correspondant aux cinq dernières barres du caractère. Le seuil est alors plus finement réajusté en fonction de la vitesse correspondant à la dernière barre du caractère. A partir de cette dernière barre, le seuil et la vitesse pourront être extrapolés.
102. On attend l'arrivée de la première barre du caractère suivant.
103. Cette première barre est datée.
104. On attend l'arrivée de la barre suivante.
106. Cette barre suivante est datée, ce qui permet de déterminer la durée séparant cette barre de la précédente.
108. La durée séparant les deux barres est comparée au seuil. Si elle est supérieure au seuil, la vitesse est calculée en divisant la distance normalisée longue par cette durée, sinon elle est calculée en divisant la distance normalisée courte par cette durée. L'accélération peut être réajustée dès que l'on a déterminé deux vitesses successives, c'est-à-dire à l'arrivée de la troisième barre du caractère. On réajuste le seuil à l'aide de la nouvelle vitesse.
110. Entre les arrivées de deux barres, que ce soit deux barres d'un même caractère ou les dernière et première barres de deux caractères successifs, on extrapole la vitesse et le seuil.
112. Le cas échéant, l'impression de texte sur le chèque en cours de traitement est synchronisée à partir de la vitesse directement déterminée au bloc 108 ou extrapolée au bloc 110. Plus précisément, cette vitesse est intégrée en tenant compte de l'accélération pour estimer la distance parcourue par le chèque, ce qui permet de savoir à quel moment il faut imprimer une nouvelle rangée verticale de points.
114. Si la barre est la dernière du caractère, le traitement recommence au bloc 102 par l'attente de la première barre du caractère suivant. Sinon, le traitement continue au bloc 104 par l'attente de la prochaine barre du caractère.

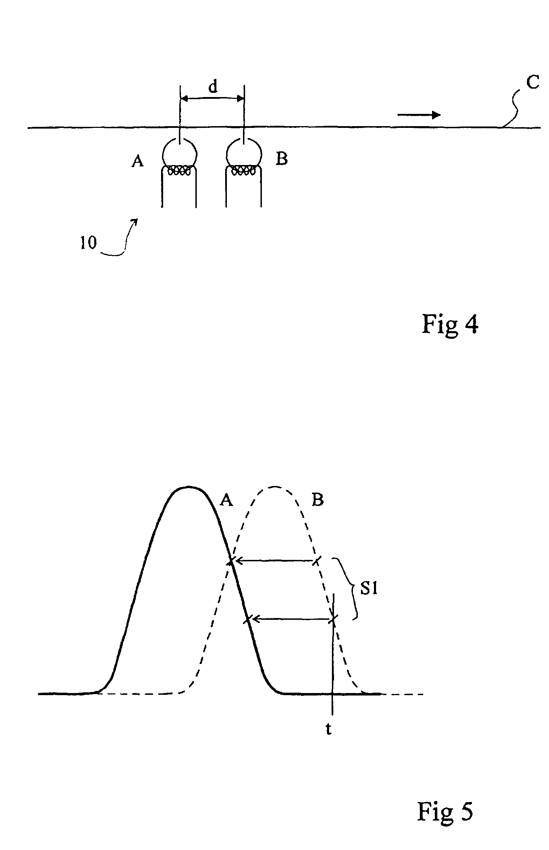

La figure 4 représente schématiquement un dispositif de lecture selon l'invention de caractères de contrôle E13B (figure 2) permettant de déterminer la vitesse instantanée de défilement d'un chèque C entraîné manuellement. Ce dispositif de lecture comprend une tête de lecture 10 munie de deux capteurs magnétiques A et B disposés à une distance connue d l'un de l'autre.

Chacun de ces capteurs A et B est du type utilisé classiquement pour lire des caractères en encre magnétique et sont tous deux intégrés, par exemple, dans une même tête de lecture.

La figure 5 représente un exemple d'allure de signaux fournis par chacun des capteurs A et B. Si le capteur A est le premier dans le sens de défilement du chèque C, représenté par une flèche à la figure 4, le signal A est en avance de phase par rapport au signal B. Cette avance de phase est inversement proportionnelle à la vitesse de défilement du chèque C.

Les signaux A et B sont échantillonnés et mémorisés. Ceci est classique pour un seul des signaux dans le but d'effectuer une reconnaissance de forme pour identifier les caractères. Pour connaître, selon l'invention, la vitesse de défilement à un instant d'échantillonnage t, une première approche consiste à trouver parmi les derniers échantillons du signal A un échantillon de même amplitude que celui pris à l'instant t du signal B. Alors, le nombre d'échantillons qui séparent l'échantillon du signal B de l'échantillon du signal A fournit, à l'instant t, le temps mis par le chèque à parcourir la distance d, et donc la vitesse à l'instant t.

Cette approche suffit si l'on suppose que la vitesse du chèque C ne varie pas sur la distance d.

Une approche plus fine, qui tient compte des variations de vitesse sur la distance d, consiste à définir sur le signal B un segment S1 constitué par l'échantillon de l'instant t et quelques échantillons précédents, puis à décaler ce segment S1 dans le temps, en parcourant les derniers échantillons du signal A, jusqu'à ce que l'on obtienne la distance minimale entre ce segment S1 et un segment correspondant du signal A. Le décalage alors subi par le segment S1 correspond de façon plus précise au temps mis par le chèque C à parcourir la distance d.

Bien entendu, ce procédé ne s'applique que si les signaux A et B présentent des variations d'amplitude. Ainsi, dans les intervalles séparant deux caractères, ou même deux impulsions correspondant à un même caractère, on ne peut pas déterminer la vitesse. La vitesse est alors extrapolée en fonction de la dernière vitesse déterminée et de l'accélération que l'on aura pu calculer.

Afin d'effectuer une reconnaissance des caractères de contrôle E13B, chaque échantillon du signal B, par exemple, est mémorisé avec la vitesse correspondante. Ensuite, l'allure du signal B est normalisée, c'est-à-dire que cette allure est localement dilatée ou comprimée dans le temps, à l'aide des échantillons et des vitesses correspondantes, de manière à obtenir l'allure qui aurait été obtenue avec une vitesse de défilement constante. Cette allure normalisée peut alors subir une reconnaissance de forme classique déjà utilisée pour reconnaître les caractères E13B.

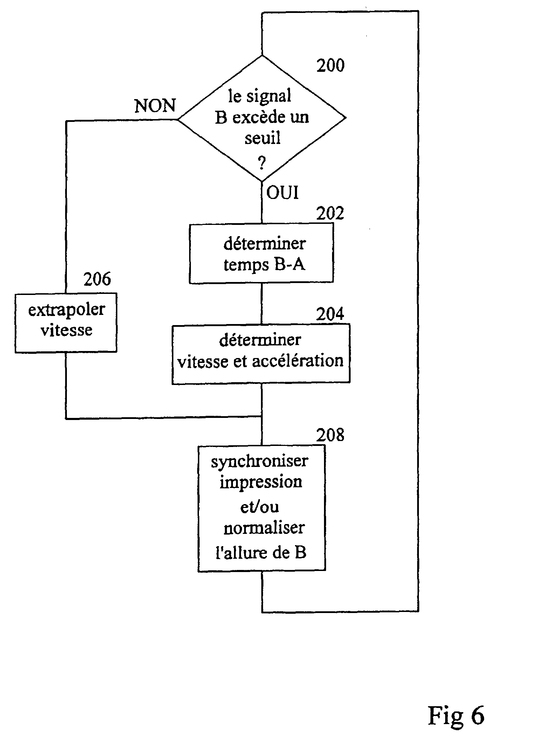

La figure 6 représente un exemple d'organigramme illustrant plus en détail le procédé de détermination de vitesse à partir des caractères E13B. Un paragraphe décrivant un bloc d'organigramme est précédé du numéro du bloc.
200. Il est vérifié si l'échantillon courant du signal B excède un seuil. En effet, comme on l'a précédemment indiqué, le procédé de détermination de vitesse ne s'applique pas dans des portions où les signaux A et B sont à zéro.
202. L'échantillon du signal B excède le seuil. On détermine alors, de la manière précédemment décrite, le temps séparant l'échantillon courant du signal B de celui qui lui correspond le mieux parmi les derniers échantillons du signal A.
204. A l'aide du temps déterminé au bloc 202, on calcule la vitesse en divisant la distance d par ce temps. Pour pouvoir extrapoler la vitesse, on calcule également l'accélération à partir des deux dernières vitesses.
206. L'échantillon du signal B n'excède pas le seuil. Alors, la vitesse est extrapolée à partir des dernières valeurs de la vitesse et de l'accélération.
208. Le cas échéant, l'impression de texte sur le chèque est synchronisée à partir de la vitesse déterminée ou extrapolée. L'allure du signal B est normalisée à partir des informations de vitesse, pour permettre une reconnaissance de forme classique.

Le procédé reprend du bloc 200 avec l'échantillon suivant du signal B.

Le procédé selon l'invention peut être facilement mis en oeuvre par un microcontrôleur convenablement programmé.

## Revendications

1. Procédé de détermination de la vitesse instantanée de défilement d'un document comportant des caractères de contrôle comportant des barres à espacements normalisés, les caractères de contrôle étant exploitables électroniquement par un capteur, **caractérisé en ce que** la vitesse instantanée est déterminée en fonction de la durée de passage de deux barres devant le capteur et de l'espace nominal séparant les deux barres.

2. Procédé de détermination de la vitesse instantanée de défilement d'un document comportant des caractères de contrôle ayant des formes normalisées destinées à permettre une reconnaissance de forme du signal fourni par un capteur, **caractérisé en ce qu'**il comprend les étapes suivantes :
- détecter les caractères de contrôle à l'aide de deux capteurs (A, B) disposés à une distance prédéterminée (d) l'un de l'autre ;
- échantillonner les signaux respectifs fournis par les capteurs ;
- pour un échantillon du deuxième capteur (B) dans le sens de défilement du document, trouver parmi les échantillons du premier capteur (A) celui qui correspond le mieux audit échantillon ; et
- déterminer la vitesse instantanée en fonction de la distance entre les capteurs et de la puissance temporelle séparant ledit échantillon de celui qui correspond le mieux.

3. Procédé d'impression de texte sur un document comportant des caractères de contrôle, **caractérisé en ce que** l'impression est synchronisée sur le défilement du document à partir de la vitesse instantanée déterminée selon la revendication 1 ou 2.

4. Procédé d'impression selon la revendication 3, **caractérisé en ce que** la vitesse est extrapolée entre deux déterminations de vitesse à partir de la dernière vitesse déterminée et d'une accélération correspondante.

5. Procédé de reconnaissance de caractères de contrôle 5. Procédé de reconnaissance de caractères de contrôle sur un document défilant, **caractérisé en ce qu'**il comprend les étapes suivantes :
- déterminer la vitesse instantanée de défilement selon la revendication 2 ;
- stocker les échantillons de l'un des deux capteurs avec les vitesses correspondantes ;
- normaliser l'allure du signal fourni par ledit un des deux capteurs à l'aide des échantillons et des vitesses correspondantes ; et
- appliquer une reconnaissance de forme sur l'allure normalisée.

## Patentansprüche

1. Verfahren zum Ermitteln der momentanen Bewegungsgeschwindigkeit eines Dokuments, das Steuerzeichen, einschließlich Striche mit normierten Abständen, aufweist, wobei die Steuerzeichen von einem Sensor elektronisch ausgewertet werden können, **dadurch gekennzeichnet, daß** die momentane Geschwindigkeit als eine Funktion der Durchgangsdauer von zwei Strichen vor dem Sensor und des nominalen Abstands, der die zwei Striche trennt, bestimmt wird.

2. Verfahren zum Bestimmen der momentanen Bewegungsgeschwindigkeit eines Dokuments, das Steuerzeichen mit normierten Formen aufweist, die für eine Erkennung der Form des von einem Sensor gelieferten Signals bestimmt sind, **gekennzeichnet durch** die folgenden Verfahrensschritte:
Erfassen der Steuerzeichen mit Hilfe von zwei Sensoren (A, B), die mit einem vorgegebenen Abstand (d) zueinander angeordnet sind;
Abtasten der jeweiligen Signale, die von dem Sensoren geliefert werden;
für ein Abtastwert des zweiten Sensors (B) entlang der Bewegungsrichtung des Dokuments, Finden des Abtastwertes unter den Abtastwert des ersten Sensors (A), der diesem Abtastwert am besten entspricht; und
Bestimmen der momentanen Geschwindigkeit als eine Funktion des Abstands, zwischen den Sensoren und der Zeit, welche diesen Abtastwert von dem am besten entsprechenden Abtastwert trennt.

3. Verfahren zum Drucken eines Textes auf ein Dokument, das Steuerzeichen aufweist, **dadurch gekennzeichnet, daß** das Drucken mit der Bewegung des Dokuments abhängig von der gemäß Anspruch 1 oder 2 bestimmten momentanen Geschwindigkeit synchronisiert wird.

4. Druckverfahren nach Anspruch 3, **dadurch gekennzeichnet, daß** die Geschwindigkeit zwischen zwei Geschwindigkeitsermittlungen aus der zuletzt ermittelten Geschwindigkeit und einer entsprechenden Beschleunigung extrapoliert wird.

5. Verfahren zum Erkennen von Steuerzeichen auf sich bewegenden Dokumenten, **gekennzeichnet durch** die folgenden Verfahrensschritte:
Bestimmen der momentanen Bewegungsgeschwindigkeit gemäß Anspruch 2,
Speichern der Abtastwerte von einem der zwei Sensoren mit den entsprechenden Geschwindigkeiten,
Normieren der Wellenform des von dem einen der beiden Sensoren gelieferten Signals mit den Abtastwerten und den entsprechenden Geschwindigkeiten, und
Anwenden einer Formerkennung auf die normierte Wellenform.

## Claims

1. A method for determining the instantaneous travel speed of a document having control characters including bars with standardized spaces, the control characters being usable electronically by a sensor, **characterized in that** the instantaneous speed is determined as a function of the passage duration of two bars in front of the sensor and of the nominal space separating the two bars.

2. The method for determining the instantaneous travel speed of a document having control characters having standardized patterns for shape recognition of the signal provided by the sensor, **characterized in that** it includes the steps of:
- detecting the control characters with two sensors (A, B) placed at a predetermined distance (d) one from the other;
- sampling the respective signals provided by the sensors;
- for a sample of the second sensor (B) along the. travel direction of the document, finding among the samples of the first sensor (A) the one which best corresponds to said sample; and
- determining the instantaneous speed as a function of the distance separating the sensors and of the time distance separating said sample from the best corresponding sample.

3. A method for printing a text on a document having control characters, **characterized in that** the printing is synchronized with the traveling of the document from the instantaneous speed determined according to claim 1 or 2.

4. The printing method of claim 3, **characterized in that** the speed is extrapolated, between two speed determinations, from the last determined speed and a corresponding acceleration.

5. A method for recognizing control characters on traveling documents, **characterized in that** it includes the steps of:
- determining the instantaneous travel speed according to claim 2;
- storing the samples of one of the two sensors with the corresponding speeds;
- normalizing the waveform of the signal output by said one of the sensors with the samples and the corresponding speeds; and
- applying a shape recognition to the normalized waveform.
